# EUROPEAN PATENT APPLICATION

(11) **EP 1 403 661 A1**
(43) Date of publication of application: **31.03.2004**
(21) Application number: 03256032.8
(22) Date of filing: 25.09.2003
(51) Int. Cl.: G01T 3/06, G01T 1/202

(54) **Scintillation detector with gadolinium based sidewall axial restraint and compliance assembly**

(30) Priority: 30.09.2002 US 65258
(71) Applicant: GENERAL ELECTRIC COMPANY, Schenectady, NY 12345 (US)
(72) Inventor: Williams, James Richard, University Heights, Ohio 44118 (US)
(74) Representative: Pedder, James Cuthbert

(57) **Abstract**

A scintillation detector comprising a substantially cylindrical crystal element (12) mounted in a substantially cylindrical housing (70), one end of the housing adapted for coupling with a photo-multiplier tube (72), the substantially cylindrical crystal element wrapped about a circumferential surface thereof with a gadolinium foil (38).

## Description

This invention relates to devices for detecting radiation in oil well logging and, specifically, to a device constructed to exclude thermal neutrons from the sensor portion of the device.

One method of oil well logging employs a fast neutron source in the logging tool. Neutrons from this source are scattered and absorbed by the well-bore environment, producing gamma rays. These gamma rays are detected by a scintillation or radiation detector (typically, an Nal crystal element coupled to a photo-multiplier tube) in the tool, and give information on physical traits of the well-bore environment. A difficulty arises from the fact that thermalized neutrons are also reflected into the Nal sensor and activate the Iodine. This activated Iodine decays with a half life of 25 minutes. As these decays occur, the scintillator detects the radiation emitted and an elevated background counting rate is created. This background disturbs the measurements of interest. It is therefore desirable that these thermal neutrons be excluded from the sensitive area of the detector.

One known approach is to place a cadmium metal wrap around the exterior of the scintillation element or crystal. This is the most common solution in the oil well logging industry today. This approach has several disadvantages, however. Cadmium has only a moderate capability of absorbing thermal neutrons. Therefore, the detector must be reduced in size by as much as 20% in order to allow space for enough cadmium to effectively shield the crystal from the neutrons. Cadmium is also a known carcinogen and is toxic. The cadmium wrapping is external to the detector, thus limiting the space available for the sensor and the degree to which the system may be integrated into a single product or tool.

Another known approach is to coat the interior of the detector shield with a boron compound. This approach has two disadvantages. The coating must be done at very high temperatures and can be difficult to apply. Also, boron is less effective at stopping thermal neutrons than cadmium, and therefore its thickness must be greater which, in turn, leaves even less available space for the sensitive region of the detector.

Exclusion of thermal neutrons from the crystal material can be achieved by incorporating a layer of gadolinium foil into the pre-existing support system for the detector, i.e., the crystal element of the detector. Gadolinium has the highest elemental efficiency of thermal neutron absorption, ten times greater than that of cadmium. Therefore, only a thin layer is needed. This allows more space for Nal crystal and increases the sensitive volume of the detector. Gadolinium has no known adverse health effects, but in any case, it may be hermetically sealed into the detector assembly. A complete scintillation detector package can be marketed to prospective buyers without additional work to incorporate the neutron shield into the tool assembly.

In the exemplary embodiment, the scintillation or radiation detector includes an Nal crystal of generally cylindrical shape, that is hermetically sealed within a titanium housing. An optical window for exit of light into a photo-multiplier tube, for which a threaded connection has been provided, is located at the front of the detector.

The thermal neutron shield is assembled into the detector as part of an axial and radial support assembly, and covers not only the sidewall of the crystal, but also a tapered forward section of the crystal and the rear face of the crystal. The only portion of the crystal that is not insulated is its front face that is coupled to the photo-multiplier tube.

Specifically, in the exemplary embodiment, the crystal element of the scintillation detector is wrapped with reflective tape. Surrounding the tape is a polyamide wrap, and a sidewall axial restraint and compliance assembly (SARCA) similar to that disclosed in, for example, U.S. Patent No. 5,962,855. The SARCA generally includes inner and outer layers of material that, in accordance with this invention, are sandwiched about a gadolinium foil wrap. The outer layer of the SARCA may be a Teflon® coated stainless steel sleeve and the inner layer may be a polyamide sleeve.

The Teflon® coated stainless steel sleeve is arranged with the Teflon@ coated side to the outside of the detector. An aluminum collar is glued to the inside of the stainless steel sleeve, at one end thereof. The gadolinium foil is then glued to the opposed face of the polyamide sleeve, the glue being applied only in an area that will align with the collar on the stainless steel sleeve. The remaining interface between the gadolinium and the polyamide sleeve is filled with grease. The inner SARCA (comprised of the polyamide sleeve and gadolinium foil) is then glued to the outer SARCA (the Teflon® coated stainless steel sleeve and aluminum collar), with the gadolinium foil sandwiched between the uncoated side of the stainless steel sleeve and the polyamide sleeve. The assembled SARCA is then wrapped about the crystal and held in place by, for example, a strip of Kapton tape.

The entire scintillation detector component of the detector is then located within a cylindrical Titanium shield or housing, with axially extending leaf springs spaced about the detector assembly, between the detector and the shield. The scintillation detector component is then ready for coupling with the photo-multiplier tube.

Other embodiments of the invention may include the use of other crystal materials that may be activated by thermal neutrons, other housings into which the detector may be hermetically sealed, other optical coupling mechanisms, and other axial and/or radial support assemblies.

Accordingly, in one aspect, the invention relates to a scintillation detector comprising a substantially cylindrical crystal element mounted in a substantially cylindrical housing, one end of the housing adapted for coupling with a photo-multiplier tube, the substantially cylindrical crystal element wrapped about a circumferential surface thereof with a gadolinium foil.

In another aspect, the invention relates to a scintillation detector comprising a sodium iodide crystal element mounted within a housing coupled at one end to a photo-multiplier tube, the crystal element substantially enclosed by a gadolinium foil within a stainless steel sleeve.

In still another aspect, the invention relates to a scintillation detector comprising a substantially cylindrical crystal element mounted in a substantially cylindrical housing; a radial and axial support assembly within the housing, located radially between the crystal element and the housing, the radial and axial support assembly including a gadolinium foil sleeve substantially surrounding the crystal element.

The invention will now be described in greater detail, by way of example, with reference to the drawings, in which:-
FIGURE 1 is a side elevation of a scintillation or crystal component of a radiation detector in accordance with an exemplary embodiment of the invention;
FIGURE 2 is a perspective view, in exploded form, of the scintillation or crystal component shown in Figure 1;
FIGURE 3 is a perspective view, in exploded form, illustrating two components of the internal axial and radial support system incorporated within the scintillation or crystal component shown in Figure 1;
FIGURE 4 is a perspective view, in exploded form, of two additional components of the internal radial and axial support assembly; and
FIGURE 5 is a perspective view, in exploded form, showing the assembled components of Figure 3 and the assembled components of Figure 4.

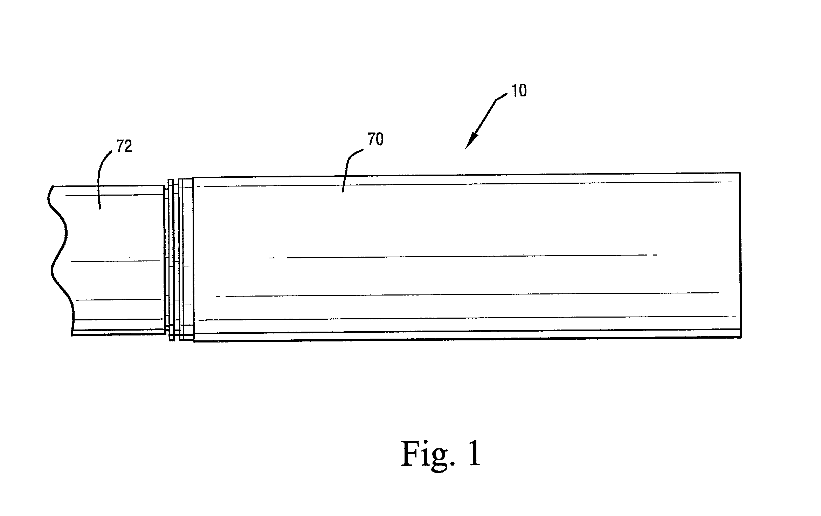

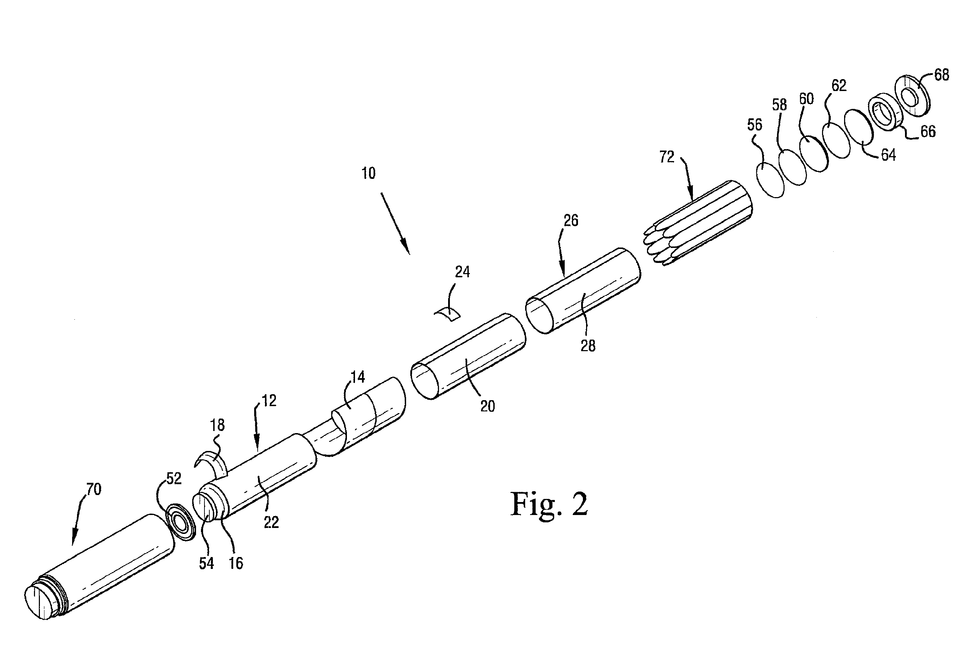

Referring to Figures 1 and 2, the scintillation or crystal component 10 of the radiation detector in the exemplary embodiment includes a machined crystal or scintillation element 12, preferably a sodium-iodide (Nal) crystal. Other suitable compositions for the crystal include anthracene, bismuth germanium oxide (BGO, cerium oxide (Cel), cesium iodide (Csl), gadolinium orthosilicate (GSO), lutetium orthosilicate (LSO) and other like substances. The crystal 12 receives radiation from the well bore, transforms the radiation into light impulses and transmits the light impulses to a photo-multiplier tube 72 that is attached to a forward end of the crystal component.

The crystal 12 is initially wrapped with a reflective Teflon@ tape 14. The forward, tapered end 16 of the crystal is shielded by a conically shaped gadolinium foil 18 (partially shown in Figure 2). A thin polyamide layer 20 is then wrapped about the cylindrical portion 22 of the crystal and secured by a 1/4" strip of Kapton tape 24.

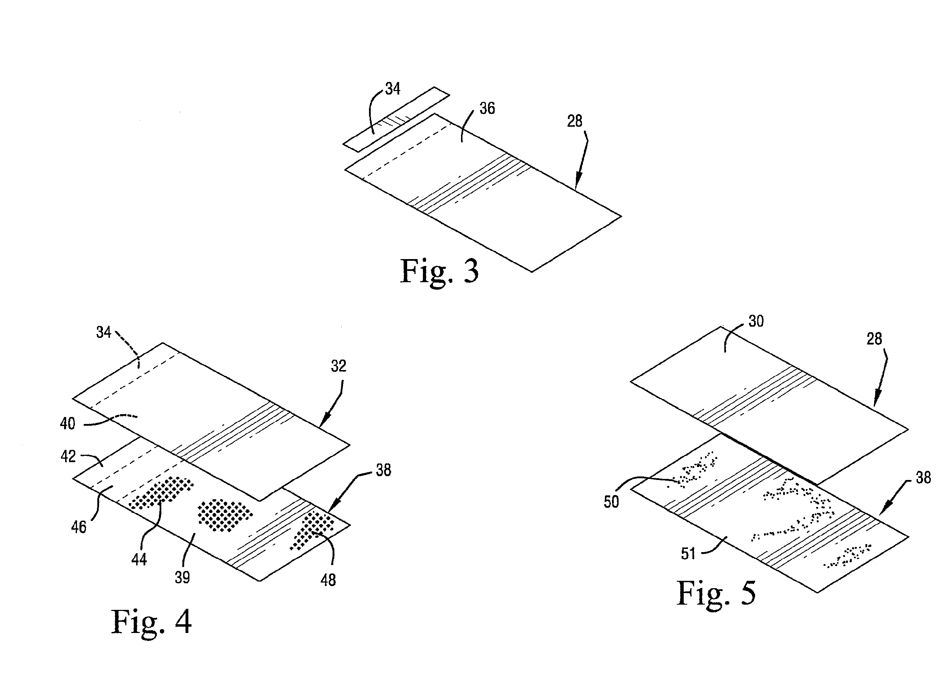

With reference also to Figures 3-5, the SARCA assembly 26 includes an outer stainless steel sleeve 28, the outer surface 30 of which (see Fig. 5) is coated with Teflon@, and an inner polyamide sleeve 32 (see Fig. 4). After the non-coated side (or inner surface) 36 of the sleeve (see Fig. 3) is cleaned and primed, a narrow, thin aluminum collar 34 (about 0.25 in. wide and no more than 0.010 in. thick) is secured at one end of the inner surface 36 of the sleeve 28, using Sylgard 184 or other similar adhesive. The adhesive is preferably applied to both the collar and the sleeve. As best seen in Fig. 4, a gadolinium foil 38 is then applied to the inner surface 40 of the polyamide sleeve 32 as follows. Glue (preferably Sylgard) is applied to the inner surface 39 of the gadolinium foil 38, but only in the area 42 that will align with the aluminum collar 34. Grease 48 is then applied over most of the remaining area 44 of surface 39 of the gadolinium foil 38, leaving space 46 (of about 0.25 inch) blank. The foil 38 is then adhered to the inner surface of the 40 of the polyamide sleeve, with the grease 48 sandwiched therebetween.

The inner SARCA (the polyamide sleeve 32 and gadolinium foil 38) is then secured to the underside of the upper SARCA (the stainless sleeve 28 and collar 32) via glue 50 (preferably Sylgard) applied to the uncoated or radially inner side of sleeve 28 (including collar 34) and to the radially outer surface 51 of the gadolinium foil 38. The SARCA assembly is then baked at 200°C. for about 20 minutes.

Referring again to Figure 2, the final assembly includes locating a coupler 52 at the forward end of the crystal 12, with silicon oil between the coupler and the front face 54 of the crystal. At the opposite or rearward end of the crystal, Teflon@ tape discs 56, 58 are applied to the back face of the crystal 12, with a boron nitride disc 60 and a gadolinium disc 62 sandwiched between the tape discs 56, 58, a compression plate 64, axial spring 66 and an end cap 68. This entire detector assembly is located within a stainless steel shield 70, with axially extending radial springs 72 located radially between the SARCA assembly 26 and the shield 70. The end cap 68 is welded to the end of the shield 70, thereby holding all of the above components within the shield (or detector housing). The forward end of the shield 70 is threaded to facilitate attachment of a photo-multiplier tube 72 (Figure 1) in conventional fashion, and the combined detector may then be located in a tool housing (not shown).

For the sake of good order, various aspects of the invention are set out in the following clauses:-
1. A scintillation detector (10) comprising a substantially cylindrical crystal element (12) mounted in a substantially cylindrical housing (70), one end of said housing adapted for coupling with a photo-multiplier tube (72), said substantially cylindrical crystal element (12) wrapped about a circumferential surface thereof with a gadolinium foil (38).
2. The scintillation detector of clause 1 wherein said crystal element is formed with a conical forward portion (16), and wherein said conical portion is also wrapped with gadolinium foil (18).
3. The scintillation detector of clause 1 wherein a gadolinium disk (62) covers a rear face of said crystal element.
4. The scintillation detector of clause 1 wherein said crystal element is comprised of sodium iodide.
5. The scintillation detector of clause 1 including a photo-multiplier tube (72) affixed to a forward end of said crystal element.
6. A scintillation detector comprising a sodium iodide crystal element (12) mounted within a housing (70) coupled at one end to a photo-multiplier tube (72), said crystal element (12) substantially enclosed by a gadolinium foil (38) within a stainless steel sleeve (28).
7. The scintillation detector of clause 6 wherein said crystal is wrapped with a reflective tape (14), and said gadolinium foil (38) is radially between said reflective tape (14) and said stainless steel sleeve (28).
8. The scintillation detector of clause 7 wherein said crystal element (12) is formed with a conical forward portion (16), and wherein said conical portion is also wrapped with gadolinium foil (18).
9. A scintillation detector (10) comprising a substantially cylindrical crystal element (12) mounted in a substantially cylindrical housing (70); a radial and axial support assembly (26) within said housing, located radially between said crystal element and said housing, said radial and axial support assembly (26) including a gadolinium foil sleeve (38) substantially surrounding said crystal element.
10. The scintillation detector of clause 9 including a photo-multiplier tube (72) affixed to a forward end of said crystal element.
11. The scintillation detector of clause 10 wherein said radial and axial support assembly (26) includes a circular disc (62) of gadolinium covering a rearward face of said crystal element.
12. The scintillation detector of clause 9 wherein said crystal element is formed with a conical forward portion (16), and wherein said conical portion is also wrapped with gadolinium foil (18).
13. The scintillation detector of clause 9 wherein said radial and axial support assembly (26) includes a radially outer sleeve (28) and a radially inner sleeve (32), and wherein said gadolinium foil sleeve (38) is located radially between said radially outer and radially inner sleeves.
14. The scintillation detector of clause 13 wherein said radially outer sleeve (28) is comprised of stainless steel.
15. The scintillation detector of clause 14 wherein said radially inner sleeve (32) is comprised of a polyamide.
16. The scintillation detector of clause 14 wherein an aluminum collar (34) is fixed to an underside of said radially outer sleeve (28) at one end thereof, and wherein said gadolinium foil sleeve (38) extends across said collar.
17. The scintillation detector of clause 16 wherein said gadolinium foil sleeve (38) is adhesively secured on a radially inner surface (40) thereof to said radially inner sleeve (32) only in an area that is aligned with said aluminum collar (34).
18. The scintillation detector of clause 17 wherein most of a remaining area of said radially inner surface (40) is covered with grease.
19. The scintillation detector of clause 16 wherein a radially outer surface of said gadolinium foil (38) is adhesively secured to said underside of said radially outer sleeve (28).

## Claims

1. A scintillation detector (10) comprising a substantially cylindrical crystal element (12) mounted in a substantially cylindrical housing (70); a radial and axial support assembly (26) within said housing, located radially between said crystal element and said housing, said radial and axial support assembly (26) including a gadolinium foil sleeve (38) substantially surrounding said crystal element.

2. The scintillation detector of claim 1 including a photo-multiplier tube (72) affixed to a forward end of said crystal element.

3. The scintillation detector of claim 2 wherein said radial and axial support assembly (26) includes a circular disc (62) of gadolinium covering a rearward face of said crystal element.

4. The scintillation detector of claim 1 wherein said crystal element is formed with a conical forward portion (16), and wherein said conical portion is also wrapped with gadolinium foil (18).

5. The scintillation detector of claim 1 wherein said radial and axial support assembly (26) includes a radially outer sleeve (28) and a radially inner sleeve (32), and wherein said gadolinium foil sleeve (38) is located radially between said radially outer and radially inner sleeves.

6. The scintillation detector of claim 5 wherein said radially outer sleeve (28) is comprised of stainless steel.

7. The scintillation detector of claim 6 wherein said radially inner sleeve (32) is comprised of a polyamide.

8. The scintillation detector of claim 6 wherein an aluminum collar (34) is fixed to an underside of said radially outer sleeve (28) at one end thereof, and wherein said gadolinium foil sleeve (38) extends across said collar.

9. The scintillation detector of claim 8 wherein said gadolinium foil sleeve (38) is adhesively secured on a radially inner surface (40) thereof to said radially inner sleeve (32) only in an area that is aligned with said aluminum collar (34).

10. The scintillation detector of claim 9 wherein most of a remaining area of said radially inner surface (40) is covered with grease.

11. The scintillation detector of claim 8 wherein a radially outer surface of said gadolinium foil (38) is adhesively secured to said underside of said radially outer sleeve (28).
